# EUROPÄISCHE PATENTANMELDUNG

(11) **EP 3 858 507 A1**
(43) Veröffentlichungstag der Anmeldung: **04.08.2021**
(21) Anmeldenummer: 21153677.6
(22) Anmeldetag: 27.01.2021
(51) Int. Cl.: B21D 5/00, B21D 5/04

(54) **ABKANTVORRICHTUNG ZUM BIEGEN EINES WERKSTÜCKS SOWIE VERFAHREN ZUM BETREIBEN EINER SOLCHEN ABKANTVORRICHTUNG**

(30) Priorität: 28.01.2020 DE 102020200971; 20.02.2020 DE 102020202201
(71) Anmelder: Sperr & Lechner Splek Maschinenbau GmbH & Co. KG, 74613 Öhringen-Ohrnberg (DE)
(72) Erfinder: THIESKES, Siegmar, 74613 Öhringen-Ohrnberg (DE)
(74) Vertreter: BRP Renaud & Partner mbB Rechtsanwälte Patentanwälte Steuerberater

(57) **Zusammenfassung**

Die Erfindung betrifft eine Abkantvorrichtung (1) zum Biegen eines Werkstücks (2) aus Flachmaterial, mit einem eine plane Bestückungsfläche (4) aufweisenden Maschinengestell (3), an dem eine relativ zur Bestückungsfläche (4) bewegbare Klemmwange (5) angeordnet ist. Die Klemmwange (5) klemmt ein auf die Bestückungsfläche (4) an einer vorgegebenen oder vorgebbaren Bestückungsposition (6) positioniertes Werkstück (2) am Maschinengestell (3) fest. Weiterhin ist an der Abkantvorrichtung (1) eine Biegeeinrichtung (7) aus mindestens einem Biegewerkzeug (8) angeordnet, das relativ zur Bestückungsfläche (4) bewegbar ist, so dass das festgeklemmte Werkstück (2) um einen bestimmten Biegewinkel biegbar ist.

Wesentlich ist, dass eine Maschinensteuerung (22) vorgesehen ist, die mit einem Schneidwerkzeugantrieb (20) eines Schneidwerkzeugs (11) zum Schneiden des Werkstücks (2) gekoppelt ist und die zur Durchführung eines Schneidvorgangs zum Durchtrennen eines Werkstücks (2), das bezüglich der Biegeachse (9) kleiner ist als ein Abstand (35) zwischen der Startposition (13) und der Endposition (14), den Schneidwerkzeugantrieb (20) automatisch zum Bewegen des Schneidwerkzeugs (11) von der Startposition (13) nur bis zu einem vom Werkstückanschlag (16) entfernten Werkstückende (36) des Werkstücks (2) und von dort aus wieder zurück zur Startposition (13) ansteuert.

## Beschreibung

Die Erfindung betrifft eine Abkantvorrichtung zum Biegen eines Werkstücks nach dem Gegenstand des Anspruchs 1 und ferner ein Verfahren zum Betreiben einer solchen Abkantvorrichtung.

Abkantvorrichtungen zum Biegen von Werkstücken der eingangs genannten Art sind seit langem bekannt. Sie dienen dazu, aus einem umzuformenden Werkstück, beispielsweise ein Flachmaterial wie z.B. ein Blechstück, eine beliebige Biegegeometrie herzustellen. Hierzu wird ein Werkstück festgeklemmt und mehrmalig umgebogen. Um das jeweilige Werkstück auf ein vorgegebenes Werkstückmaß zu bringen, kann zweckmäßigerweise vor und/oder nach dem Umbiegen zugeschnitten, sprich abgelängt, werden. Hierzu nutzt man Schneideinrichtungen. Nachteilig an den bekannten Schneideinrichtungen ist, dass das Ablängen eines Werkstücks mit relativ hohem Zeitaufwand verbunden ist.

Die Aufgabe der Erfindung liegt daher darin, eine verbesserte oder zumindest eine andere Ausführungsform einer Abkantvorrichtung zum Biegen eines Werkstücks bereitzustellen.

Bei der vorliegenden Erfindung wird diese Aufgabe insbesondere durch die Gegenstände der unabhängigen Ansprüche gelöst. Vorteilhafte Ausführungsformen sind Gegenstand der abhängigen Ansprüche und der Beschreibung.

Der Grundgedanke der Erfindung liegt darin, eine Abkantvorrichtung anzugeben, mittels der die Bearbeitung eines Werkstücks verbessert ist. Insbesondere soll versucht werden, das Ablängen eines Werkstücks mittels einer Schneideinrichtung zeitlich zu beschleunigen, also schneller zu gestalten.

Hierzu ist eine Abkantvorrichtung zum Biegen eines Werkstücks aus Flachmaterial vorgesehen, beispielsweise handelt es sich beim Flachmaterial um Blech. Die Abkantvorrichtung weist ein zweckmäßigerweise auf einem ebenen Untergrund abstellbares Maschinengestell auf, das eine plane Bestückungsfläche hat. Am Maschinengestell ist mindestens eine und relativ zur Bestückungsfläche bewegbare Klemmwange angeordnet, die ein auf die Bestückungsfläche an einer Bestückungsposition positioniertes Werkstück am Maschinengestell lösbar festklemmt. Am Maschinengestell ist weiterhin eine Biegeeinrichtung aus mindestens einem Biegewerkzeug angeordnet. Das Biegewerkzeug ist relativ zur Bestückungsfläche herum bewegbar gestaltet, so dass das festgeklemmte Werkstück um einen bestimmten Biegewinkel biegbar ist. An der Abkantvorrichtung ist außerdem eine Schneideinrichtung aus mindestens einem Schneidwerkzeug angeordnet, wobei das Schneidwerkzeug mit einem Schneidwerkzeugantrieb im Rahmen einer Arbeitsbewegung relativ zur Bestückungsfläche zwischen einer Startposition und einer Endposition hin und her bewegbar ist. Im Rahmen der Arbeitsbewegung kann das festgeklemmte Werkstück entlang einer Schneidachse zweckmäßigerweise vom Schneidwerkzeug vollständig durchtrennt werden. Die Bestückungsposition ist zweckmäßigerweise durch einen an der Abkantvorrichtung angeordneten Werkstückanschlag zum Anlegen eines umzubiegenden und/oder zu durchtrennenden Werkstücks vorgegeben, weiter zweckmäßigerweise kann die Bestückungsposition durch den Maschinenbediener manuell durch Messen vorgegeben werden. Die Abkantvorrichtung ist so gestaltet, dass die Startposition einenends am Maschinengestell und die Endposition anderenends am Maschinengestell angeordnet sind. Es ist eine Maschinensteuerung vorgesehen, die mit dem Schneidwerkzeugantrieb gekoppelt ist. Die Maschinensteuerung steuert zur Durchführung eines Schneidvorgangs zum Durchtrennen eines Werkstücks, das bezüglich einer Maschinenlängsachse kleiner ist, als ein Abstand zwischen der Startposition und der Endposition, den Schneidwerkzeugantrieb automatisch zum Bewegen des Schneidwerkzeugs von der Startposition nur bis zu einem vom Werkstückanschlag oder von der Startposition entfernten Werkstückende des Werkstücks und von dort aus wieder zurück zur Startposition an. Dadurch bewegt sich das Schneidwerkzeug unmittelbar nach dem Passieren eines Werkstückendes des jeweiligen Werkstücks automatisch in die Startposition zurück, anstatt sich unabhängig vom Werkstückende bzw. einer Werkstücklänge des Werkstücks zunächst bis zur Endposition und von dort aus wieder zurück zur Startposition zu bewegen. Im Ergebnis kann dadurch vom Schneidwerkzeug zum Durchtrennen eines Werkstücks zurückzulegende Wegstrecke reduziert werden. Aufgrund der reduzierten Wegstrecke kann beim Durchtrennen eines Werkstücks mit der jeweiligen Werkstücklänge korrelierende Bearbeitungszeit eingespart werden, so dass die Bearbeitung eines Werkstücks insgesamt günstig ist. Dieser Vorteil ist insbesondere dann von Bedeutung, wenn sich die Abkantvorrichtung zum Abkanten relativ großer bzw. langer Werkstücke eignet, z.B. mehr als 4 m. Auch mit solchen langen Abkantvorrichtungen, sogenannten Langabkantvorrichtungen, werden häufig kürzere Werkstücke abgekantet, so dass sich der beschriebene Vorteil ergibt.

Zweckmäßigerweise ist vorgesehen, dass die Maschinensteuerung eine Sensorik aufweist, welche ein vom Werkstückanschlag entferntes Werkstückende des Werkstücks, beispielswiese eine Werkstückkante des jeweiligen Werkstücks, ermittelt. Durch das Ermitteln eines Werkstückendes eines Werkstücks anhand der Sensorik kann sozusagen eine Umkehrposition ermittelt werden, anhand der man das Schneidwerkzeug mittels der Maschinensteuerung ansteuern kann. Somit kann das Schneidwerkzeug gezielt aus seiner Bewegung heraus gestoppt und zur Endposition zurückbewegt werden.

Insbesondere kann die Sensorik mindestens einen Schneidfahrtzustand und mindestens einen Leerfahrtzustand des Schneidwerkzeugs erfassen, wobei ein mindestens einem Schneidfahrtzustand zeitlich unmittelbar nachfolgender Leerfahrtzustand ein vom Werkstückanschlag entferntes Werkstückende des Werkstücks anzeigen kann. Dadurch ist eine Logik angegeben, anhand der Arbeitszustände des Schneidwerkzeugs beurteilt werden können. Arbeitszustände können beispielsweise gegeben sein durch einen Schneidfahrtzustand, der den Zustand bezeichnet, wenn das Schneidwerkzeug berührend mit dem Werkstück im Eingriff ist, und durch einen Leerfahrtzustand, der den Zustand bezeichnet, wenn das Schneidwerkzeug nicht mit dem Werkstück im Eingriff ist. Die Logik hat den Vorteil, dass das Schneidwerkzeug unmittelbar am oder relativ nahe am Werkstückende des jeweiligen Werkstücks gestoppt und umgekehrt werden kann.

Zweckmäßigerweise kann die Sensorik den Strombedarf des Schneidwerkzeugantriebs erfassen. Ein relativ hoher Strombedarf kann einen Schneidfahrtzustand anzeigen, während ein relativ niedriger Strombedarf einen Leerfahrtzustand anzeigen kann. Dadurch kann vorteilhafterweise eine konstruktiv günstig umzusetzende, zeitlich schnell arbeitende und einfach in bestehende Abkantvorrichtungen integrierbare Erfassung der Arbeitszustände des Schneidwerkzeugs realisiert werden.

Weiter zweckmäßigerweise können die Maschinensteuerung und/oder die Sensorik dazu ausgebildet sein, bei elektrisch leitfähigen Werkstücken die elektrische Durchleitfähigkeit des Werkstücks zu nutzen. Insb. kann man einen Durchleit-Messstrom messtechnisch erfassen und anhand des gemessenen Durchleit-Messstroms ein Werkstückende des jeweiligen Werkstücks detektieren.

Zweckmäßigerweise können an der Bestückungsfläche statt eines Werkstücks mehrere voneinander getrennte Werkstücke, sozusagen Einzelwerkstücke, angeordnet sein. Die Werkstücke sind zweckmäßigerweise mit gegenseitigem Abstand zueinander an der Bestückungsfläche lösbar festklemmt, wobei zwischen zwei benachbarten Werkstücken jeweils eine werkstückfreie Lücke definiert ist. Es ist möglich, die Abkantvorrichtung so einzurichten, dass die mehreren Werkstücke gemeinsam durchtrennt oder geschnitten und/oder gebogen werden, wozu man z.B. die Anzahl der Werkstücke oder die Anzahl der Lücken in die Maschinensteuerung eingeben oder einspeichern kann. Alternativ kann man die Maschinensteuerung programmieren. Im Ergebnis kann eine vorgegebene oder vorgebare Anzahl von Lücken zwischen den jeweiligen Werkstücken oder Werkstücke vom Schneidwerkzeug überfahren werden, bevor das Schneidwerkzeug in seine Startposition zurückkehrt.

Weiter zweckmäßigerweise kann die Sensorik die zu Erfassenden Schneidfahrtzustände und Leerfahrtzustände anhand von am Schneidwerkzeug auftretenden Schneidmessgrößen erfassen. Vorteilhafterweise können die Arbeitszustände des Schneidwerkzeugs anhand von unmittelbar am Schneidwerkzeug auftretenden Schneidmessgrößen bestimmt werden.

Zweckmäßigerweise kann die Sensorik zur Erfassung der Schneidmessgrößen des Schneidwerkzeugs einen Signalgeber und/oder einen Signalsensor aufweisen. Ein Signalgeber kann dabei durch mindestens einen Lasergeber oder durch mindestens einen Lichtgeber, insb. einen Lichtvorhang, oder durch mindestens einen Ultraschallgeber gebildet sein. Ein Signalsensor kann durch mindestens einen Lasersensor oder durch mindestens einen Lichtsensor oder durch mindestens einen Ultraschallsensor oder durch mindestens einen Hall-Sensor gebildet sein. Das hat den Vorteil, dass die Sensorik zweckmäßigerweise aus gängigen und insb. kostengünstigen Sensorik-Komponenten aufgebaut werden kann, wodurch die Abkantvorrichtung insgesamt relativ kostengünstig ist.

Zweckmäßigerweise kann die Sensorik einen oder mehrere am Schneidwerkzeug längs und/oder quer zur Schneidachse vor und/oder nach dem Schneidwerkzeug angeordneten Werkstückdetektoren aufweisen. Die Werkstückdetektoren können ein Werkstück erfassen, wobei die Erfassung des jeweiligen Werkstücks einen Schneidfahrtzustand anzeigt und wobei die Nicht-Erfassung einen Leerfahrtzustand anzeigt. Anhand eines in Richtung der Schneidachse vor dem Schneidwerkzeug angeordneten Werkstückdetektors kann das Vorhandensein eines undurchtrennten Werkstücks, sozusagen das Rohwerkstück, am Schneidwerkzeug erfasst werden. Weiterhin kann anhand eines in Richtung der Schneidachse nach dem Schneidwerkzeug angeordneten Werkstückdetektors das Vorhandensein eines durchtrennten Werkstücks erfasst werden, beispielsweises ein abgetrennter Werkstückspan und das zugeschnittene Werkstück. Das hat den Vorteil, dass die Arbeitszustände des Schneidwerkzeugs relativ zuverlässig und zeitlich relativ schnell erfassbar sind.

Weiter zweckmäßigerweise kann die Sensorik Schneidfahrtzustände und Leerfahrtzustände anhand eines an der Bestückungsfläche angeordneten Lichtvorhangs erfassen. Der Lichtvorhang weist zweckmäßigerweise längs der Maschinenlängsachse zueinander mit gegenseitigem Abstand angeordnete Lichtgeber und längs der Maschinenlängsachse zueinander mit gegenseitigem Abstand angeordnete Lichtsensoren auf. Beispielsweise sind Geber und Sensor jeweils paarweise gegenüberliegend am Schneidwerkzeug angeordnet, um auftretende Schneidmessgrößen am Schneidwerkzeug zu messen. Hierdurch können die Schneidmessgrößen am Schneidwerkzeug relativ schnell und relativ zuverlässig erfasst werden.

Zweckmäßigerweise kann die Sensorik einen an der Bestückungsfläche angeordneten Lichtvorhang aufweisen. Der Lichtvorhang kann längs der Maschinenlängsachse zueinander mit gegenseitigem Abstand angeordnete Lichtgeber und längs der Maschinenlängsachse zueinander mit gegenseitigem Abstand angeordnete Lichtsensoren aufweisen, wobei die Lichtgeber und Lichtsensoren zusammenwirken, um eine parallel bezüglich der Maschinenlängsachse zwischen der Startposition und der Endposition gemessene Werkstücklänge eines auf der Bestückungsfläche positionierten Werkstücks zu erfassen, wobei die Maschinensteuerung den Schneidwerkzeugantrieb so ansteuert, dass das Schneidwerkzeug automatisch von der Startposition nur bis zu einem, anhand der gemessene Werkstücklänge ermittelten, vom Werkstückanschlag entfernten Werkstückende des Werkstücks und von dort aus wieder zurück zur Startposition bewegt ist. Hierdurch können zwar nicht die Schneidmessgrößen am Schneidwerkzeug erfasst werden, allerdings kann anhand der gemessenen Werkstücklänge eines auf der Bestückungsfläche positionierten Werkstücks eine Umkehrposition ermittelt werden, anhand der man dann das Schneidwerkzeug mittels der Maschinensteuerung entsprechend ansteuern kann. Das Schneidwerkzeug kann somit aus seiner Bewegung heraus stoppen und zur Endposition zurück fahren. Das hat den Vorteil, dass das Schneidwerkzeug unmittelbar am oder relativ nahe am Werkstückende des jeweiligen Werkstücks gestoppt und umgekehrt werden kann. Natürlich können daneben auch Schneidmessgrößen am Schneidwerkzeug erfasst werden. Beispielsweise sind Geber und Sensor jeweils paarweise gegenüberliegend am Schneidwerkzeug angeordnet.

Weiter zweckmäßigerweise kann die Schneideinrichtung eine am Maschinengestell ortsfest angeordnete Führungsschiene und einen beweglichen Werkzeugschlitten aufweisen. Der Werkzeugschlitten kann an der Führungsschiene längs der Maschinenlängsachse führbar angeordnet und mittels des Schneidwerkzeugantriebs in Richtung der Maschinenlängsachse bewegbar sein. Weiterhin kann der Werkzeugschlitten mindestens eine Werkzeugaufnahme aufweisen, an der jeweils ein Schneidwerkzeug angeordnet ist. Dadurch kann das jeweilige Schneidwerkzeug vorteilhafterweise, insb. entlang einer Maschinenachse, zwischen der Startposition und der Endposition hin und her bewegt werden. Zweckmäßigerweise kann das Schneidwerkzeug eine Schneidenaufnahme zum Aufnehmen mindestens eines Schneidenelements des Schneidwerkzeugs zum vollständigen Durchtrennen des Werkstücks aufweisen. Damit wird vorteilhafterweise erreicht, dass ein positioniertes Werkstück in Richtung der Schneidachse vollständig durchgetrennt werden kann.

Weiter zweckmäßigerweise kann die Sensorik einen Schneideneingriffsbereich des Schneidenelements mit dem Werkstück erfassen. Der Schneideneingriffsbereich kann am Schneidwerkzeug in Richtung der Schneidachse vor und/oder nach dem Schneidenelement angeordnet sein. Der Schneideneingriffsbereich kann zweckmäßigerweise einen unmittelbaren Berührbereich zwischen Schneidenelement und zu durchtrennendem Werkstück bilden, in dem das Schneidenelement berührend am Werkzeug anliegt. Der Schneideneingriffsbereich kann überwacht werden, um Arbeitszustände des Schneidwerkzeugs zu erfassen. Man kann sich beispielsweise eine am Schneidwerkzeug angeordnete Lichtschranke oder dergleichen vorstellen, die den Schneideneingriffsbereich überwacht und detektiert, ob ein Werkstück vorhanden ist oder nicht.

Zweckmäßigerweise ist die Sensorik am Schneidwerkzeug und/oder am Maschinengestell angeordnet. Je nachdem, wo die Sensorik angeordnet ist, kann die Maschinensteuerung und/oder die Sensorik ausgebildet sein, um drahtlos oder drahtgebunden miteinander zu kommunizieren. Das bietet den vorteilhaften Effekt, dass auf eine Kommunikation ermöglichende Leiterkabel verzichtet werden kann. Die Abkantvorrichtung ist dadurch relativ günstig in der Herstellung.

Um das Abkanten mit einer Abkantvorrichtung zeitlich zu optimieren, sprich schneller zu machen, umfasst die Erfindung den weiteren Grundgedanken, ein Verfahren zum Betreiben einer Abkantvorrichtung gemäß der vorhergehenden Beschreibung anzugeben. Dabei ist vorgesehen, dass z.B. mittels einer Sensorik der Abkantvorrichtung die Beendigung eines vorzugsweise mittels des Schneidwerkzeugs durchgeführten Durchtrennvorgangs, d.h. eines Schneidvorgangs, eines Werkstücks erfasst wird. Daraufhin wird das im Rahmen der Arbeitsbewegung längs der Maschinenlängsachse bewegte Schneidwerkzeug zwischen der Startposition und der Endposition automatisch gestoppt, beispielsweise an einer sogenannten Umkehrposition. Weiter daraufhin wird das Schneidwerkzeug automatisch in die Startposition zurückbewegt. Das Verfahren hat den vorteilhaften Effekt, dass sich das Schneidwerkzeug unmittelbar nach dem Passieren eines Werkstückendes des jeweiligen Werkstücks automatisch in die Startposition zurück bewegt. Die Notwendigkeit, sich zunächst zur Endposition und von dort aus wieder zurück zur Startposition zu bewegen, entfällt. Dadurch kann beim Durchtrennen eines Werkstücks mit der jeweiligen Werkstücklänge korrelierende Bearbeitungszeit eingespart werden.

Weiter zweckmäßigerweise können der Werkstückanschlag und die Startposition eine Querrichtung definieren. Die Querrichtung steht winkelig oder insb. rechtwinklig auf der Maschinenlängsachse oder einer Maschinenlängsachse der Abkantvorrichtung. Das hat den Effekt, dass die Startposition und der Werkstückanschlag quer zur Arbeitsbewegung des Schneidwerkzeugs angeordnet sind. Dadurch können die Startposition und der Werkstückanschlag vorteilhafterweise zueinander unmittelbar benachbart angeordnet sein.

Zweckmäßigerweise kann in Richtung der Maschinenlängsachse zwischen dem Werkstückanschlag und der Startposition einerseits und der Endposition andererseits die Bestückungsfläche angeordnet sein. Damit sind sozusagen die Endlagen, die im Rahmen der Arbeitsbewegung vom Schneidwerkzeug anfahrbar sind, stets durch die Bestückungsfläche zueinander beabstandet. Das hat den Vorteil, dass ein an der Bestückungsfläche positioniertes Werkstück längs der Schneidachse vollständig durchtrennt werden kann.

Weiter zweckmäßigerweise kann eine Bestückungsposition für ein zu positionierendes Werkstück unmittelbar an oder im Bereich des Werkstückanschlags und der Startposition angeordnet sein. Dadurch ist ein an der jeweiligen Bestückungsposition positioniertes Werkstück stets am Werkstückanschlag angeordnet, so dass sich dieses längs der Maschinenlängsachse am Werkstückanschlag abstützen kann.

Um von der Sensorik zur Erfassung von Schneidmessgrößen, Schneidfahrtzuständen, Leerfahrtzuständen und/oder eines Strombedarfs ermittelte Messwerte speichern und auswerten zu können, weist die Sensorik zweckmäßigerweise eine Rechnereinheit auf, die mit einem Speicherelement und einem Rechenelement zum Abspeichern und Analysieren der jeweiligen Messwerte dient. Das Abspeichern und Analysieren kann in Echtzeit erfolgen. Das hat den vorteilhaften Effekt, dass die Maschinensteuerung sozusagen sofort und ohne Zögern, den Schneidwerkzeugantrieb zum Bewegen des Schneidwerkzeugs von einem vom Werkstückanschlag entfernten Werkstückende des Werkstücks zurück zur Startposition ansteuern kann.

Zweckmäßigerweise ist die Abkantvorrichtung eine Doppelabkantvorrichtung, die zwei Biegewerkzeuge aufweist, um ein festgeklemmtes Werkstück relativ zur Bestückungsfläche in zwei unterschiedliche Richtungen, insb. um die Maschinenlängsachse herum, zu biegen. Dadurch kann das jeweilige Werkstück beliebig gebogen werden, ohne es drehen zu müssen. Dadurch ist das Erzeugen von beliebigen Biegegeometrie vereinfacht.

Zweckmäßigerweise kann eine Abkantvorrichtung zum Biegen eines Werkstücks aus Flachmaterial vorgesehen sein. Sie ist mit einem eine plane Bestückungsfläche aufweisenden Maschinengestell ausgerüstet, an dem eine relativ zur Bestückungsfläche bewegbare Klemmwange angeordnet ist, die ein auf die Bestückungsfläche an einer Bestückungsposition positioniertes Werkstück am Maschinengestell lösbar festklemmt, Am Maschinengestell kann eine Biegeeinrichtung aus mindestens einem Biegewerkzeug angeordnet sein, das relativ zur Bestückungsfläche um eine Biegeachse herum bewegbar ist, um das festgeklemmte Werkstück um die Biegeachse herum zu biegen. Weiterhin kann am Maschinengestell eine Schneideinrichtung aus mindestens einem Schneidwerkzeug angeordnet sein, das mit einem Schneidwerkzeugantrieb im Rahmen einer Arbeitsbewegung relativ zur Bestückungsfläche in Richtung der Biegeachse zwischen einer Startposition und einer Endposition hin und her bewegbar ist, um das festgeklemmte Werkstück entlang einer zur Biegeachse parallel ausgerichteten Schneidachse vollständig durchzutrennen, wobei die Bestückungsposition in Richtung der Biegeachse durch einen am Maschinengestell angeordneten Werkstückanschlag zum Anlegen eines umzubiegenden und/oder zu durchtrennenden Werkstücks vorgegeben ist. Dabei sind der Werkstückanschlag und die Startposition zueinander benachbart und in Richtung der Biegeachse einenends am Maschinengestell und die Endposition anderenends am Maschinengestell angeordnet. Die Abkantvorrichtung hat ferner eine Maschinensteuerung, die mit dem Schneidwerkzeugantrieb gekoppelt ist und die zur Durchführung eines Schneidvorgangs zum Durchtrennen eines Werkstücks, das bezüglich der Biegeachse kleiner ist als ein Abstand zwischen der Startposition und der Endposition, den Schneidwerkzeugantrieb automatisch zum Bewegen des Schneidwerkzeugs von der Startposition nur bis zu einem vom Werkstückanschlag entfernten Werkstückende des Werkstücks und von dort aus wieder zurück zur Startposition ansteuert.

Zweckmäßigerweise kann die Maschinensteuerung eine Sensorik aufweisen, die ein vom Werkstückanschlag entferntes Werkstückende des Werkstücks ermittelt.

Weiter zweckmäßigerweise kann die Sensorik einen Schneidfahrtzustand und einem Leerfahrtzustand des Schneidwerkzeugs erfassen, wobei ein einem Schneidfahrtzustand zeitlich unmittelbar nachfolgender Leerfahrtzustand ein vom Werkstückanschlag entferntes Werkstückende des Werkstücks anzeigt.

Zweckmäßigerweise kann die Sensorik den Strombedarf des Schneidwerkzeugantriebs erfassen, wobei ein relativ hoher Strombedarf einen Schneidfahrtzustand und ein relativ niedriger Strombedarf einen Leerfahrtzustand anzeigt.

Weiter zweckmäßigerweise kann die Sensorik Schneidfahrtzustände und Leerfahrtzustände anhand von am Schneidwerkzeug auftretenden Schneidmessgrößen erfassen. Zweckmäßigerweise kann die Sensorik zur Erfassung der Schneidmessgrößen des Schneidwerkzeugs einen Signalgeber und/oder einen Signalsensor aufweisen, wobei der Signalgeber durch mindestens einen Lasergeber, durch mindestens einen Lichtgeber, insb. einen Lichtvorhang, oder durch mindestens einen Ultraschallgeber gebildet ist, und/oder wobei der Signalsensor durch mindestens einen Lasersensor, durch mindestens einen Lichtsensor oder durch mindestens einen Ultraschallsensor oder durch mindestens einen Hall-Sensor gebildet ist.

Zweckmäßigerweise kann die Sensorik einen am Schneidwerkzeug in Richtung der Schneidachse vor und/oder nach dem Schneidwerkzeug angeordneten Werkstückdetektor aufweisen, der ein Werkstück erfasst, wobei die Erfassung eines Werkstücks einen Schneidfahrtzustand anzeigt und wobei die Nicht-Erfassung einen Leerfahrtzustand anzeigt.

Weiter zweckmäßigerweise kann die Sensorik Schneidfahrtzustände und Leerfahrtzustände anhand eines an der Bestückungsfläche angeordneten Lichtvorhangs erfassen, wobei der Lichtvorhang längs der Biegeachse zueinander mit gegenseitigem Abstand angeordnete Lichtgeber und längs der Biegeachse zueinander mit gegenseitigem Abstand angeordnete Lichtsensoren aufweist, die am Schneidwerkzeug auftretende Schneidmessgrößen messen.

Zweckmäßigerweise kann die Sensorik einen an der Bestückungsfläche angeordneten Lichtvorhang aufweisen, der längs der Biegeachse zueinander mit gegenseitigem Abstand angeordnete Lichtgeber und längs der Biegeachse zueinander mit gegenseitigem Abstand angeordnete Lichtsensoren aufweist, wobei die Lichtgeber und Lichtsensoren zusammenwirken, um eine parallel bezüglich der Biegeachse zwischen der Startposition und der Endposition gemessene Werkstücklänge eines auf der Bestückungsfläche positionierten Werkstücks zu erfassen, wobei die Maschinensteuerung den Schneidwerkzeugantrieb so ansteuert, dass das Schneidwerkzeug automatisch von der Startposition nur bis zu einem, anhand der gemessene Werkstücklänge ermittelten, vom Werkstückanschlag entfernten Werkstückende des Werkstücks und von dort aus wieder zurück zur Startposition bewegt ist.

Weiter zweckmäßigerweise kann die Schneideinrichtung eine am Maschinengestell angeordnete Führungsschiene und einen Werkzeugschlitten aufweisen, wobei der Werkzeugschlitten längs der Biegeachse führbar an der Führungsschiene angeordnet und mittels des Schneidwerkzeugantriebs in Richtung der Biegeachse bewegbar ist, wobei der Werkzeugschlitten weiterhin an einer Werkzeugaufnahme das Schneidwerkzeug trägt.

Zweckmäßigerweise kann das Schneidwerkzeug eine Schneidenaufnahme zum Aufnehmen mindestens eines Schneidenelements des Schneidwerkzeugs zum vollständigen Durchtrennen des Werkstücks aufweisen.

Weiter zweckmäßigerweise kann die Sensorik einen Schneideneingriffsbereich des Schneidenelements mit dem Werkstück erfassen, der am Schneidwerkzeug in Richtung der Schneidachse vor oder nach dem Schneidenelement angeordnet ist.

Zweckmäßigerweise kann die Sensorik am Schneidwerkzeug und/oder am Maschinengestell angeordnet sein.

Die Maschinensteuerung und/oder die Sensorik können ausgebildet sein, drahtlos oder drahtgebunden miteinander zu kommunizieren.

Zweckmäßigerweise kann ein Verfahren zum Betreiben einer Abkantvorrichtung der vorhergehend beschriebenen Art vorgesehen sein, bei dem, z.B. mittels einer Sensorik der Abkantvorrichtung, die Beendigung eines, vorzugsweise mittels des Schneidwerkzeugs durchgeführten, Durchtrennvorgangs eines Werkstücks erfasst wird, daraufhin das im Rahmen der Arbeitsbewegung bewegte Schneidwerkzeug zwischen der Startposition und der Endposition gestoppt wird und weiter daraufhin das Schneidwerkzeug in die Startposition zurückbewegt wird. Die Maschinensteuerung der Abkantvorrichtung kann zur Durchführen dieses Verfahrens ausgestaltet und/oder programmiert sein.

Zweckmäßigerweise kann weiterhin eine Abkantvorrichtung zum Biegen eines Werkstücks aus Flachmaterial vorgesehen sein, beispielsweise handelt es sich beim Flachmaterial um Blech. Die Abkantvorrichtung kann ein zweckmäßigerweise auf einem ebenen Untergrund abstellbares Maschinengestell aufweisen, das eine plane Bestückungsfläche hat. Am Maschinengestell kann mindestens eine und relativ zur Bestückungsfläche bewegbare Klemmwange angeordnet sein, die ein auf die Bestückungsfläche an einer Bestückungsposition positioniertes Werkstück am Maschinengestell lösbar festklemmt. Am Maschinengestell kann weiterhin eine Biegeeinrichtung aus mindestens einem Biegewerkzeug angeordnet sein, wobei das Biegewerkzeug relativ zur Bestückungsfläche um eine Biegeachse herum bewegbar gestaltet ist, so dass das festgeklemmte Werkstück um die Biegeachse herum biegbar ist. Am Maschinengestell kann außerdem eine Schneideinrichtung aus mindestens einem Schneidwerkzeug angeordnet sein, wobei das Schneidwerkzeug mit einem Schneidwerkzeugantrieb im Rahmen einer Arbeitsbewegung relativ zur Bestückungsfläche in Richtung der Biegeachse zwischen einer Startposition und einer Endposition hin und her bewegbar ist. Im Rahmen der Arbeitsbewegung kann das festgeklemmte Werkstück entlang einer zur Biegeachse parallel ausgerichteten Schneidachse zweckmäßigerweise vom Schneidwerkzeug vollständig durchtrennt werden. Die Bestückungsposition kann in Richtung der Biegeachse durch einen am Maschinengestell angeordneten Werkstückanschlag, insb. eine Lasereinrichtung oder einen Maschinenanschlag, zum Anlegen eines umzubiegenden und/oder zu durchtrennenden Werkstücks vorgegeben sein. Die Abkantvorrichtung kann zweckmäßigerweise so gestaltet sein, dass der Werkstückanschlag und die Startposition zueinander benachbart und in Richtung der Biegeachse einenends am Maschinengestell angeordnet sind, während die Endposition anderenends am Maschinengestell angeordnet ist. Zudem ist zweckmäßigerweise eine Maschinensteuerung vorgesehen, die mit dem Schneidwerkzeugantrieb gekoppelt ist. Die Maschinensteuerung steuert zur Durchführung eines Schneidvorgangs zum Durchtrennen eines Werkstücks, das bezüglich der Biegeachse kleiner ist, als ein Abstand zwischen der Startposition und der Endposition, den Schneidwerkzeugantrieb automatisch zum Bewegen des Schneidwerkzeugs von der Startposition nur bis zu einem vom Werkstückanschlag entfernten Werkstückende des Werkstücks und von dort aus wieder zurück zur Startposition an. Dadurch bewegt sich das Schneidwerkzeug unmittelbar nach dem Passieren eines Werkstückendes des jeweiligen Werkstücks automatisch in die Startposition zurück, anstatt sich unabhängig vom Werkstückende bzw. einer Werkstücklänge des Werkstücks zunächst bis zur Endposition und von dort aus wieder zurück zur Startposition zu bewegen. Im Ergebnis kann dadurch vom Schneidwerkzeug zum Durchtrennen eines Werkstücks zurückzulegende Wegstrecke reduziert werden. Aufgrund der reduzierten Wegstrecke kann beim Durchtrennen eines Werkstücks mit der jeweiligen Werkstücklänge korrelierende Bearbeitungszeit eingespart werden, so dass die Bearbeitung eines Werkstücks insgesamt günstig ist. Dieser Vorteil ist insbesondere dann von erhöhter Bedeutung, wenn sich die Abkantvorrichtung zum Abkanten relativ großer bzw. langer Werkstücke eignet, z.B. mehr als 4 m. Auch mit solchen langen Abkantvorrichtungen, sogenannten Langabkantvorrichtungen, werden häufig kürzere Werkstücke abgekantet, so dass sich der beschriebene Vorteil ergibt.

Zweckmäßigerweise ist vorgesehen, dass die Maschinensteuerung eine Sensorik aufweist, welche ein vom Werkstückanschlag entferntes Werkstückende des Werkstücks, beispielswiese eine Werkstückkante des jeweiligen Werkstücks, ermittelt. Durch das Ermitteln eines Werkstückendes eines Werkstücks anhand der Sensorik kann sozusagen eine Umkehrposition ermittelt werden, anhand der man das Schneidwerkzeug mittels der Maschinensteuerung ansteuern kann. Somit kann das Schneidwerkzeug gezielt aus seiner Bewegung heraus gestoppt und zur Endposition zurückbewegt werden.

Insbesondere kann die Sensorik mindestens einen Schneidfahrtzustand und mindestens einen Leerfahrtzustand des Schneidwerkzeugs erfassen, wobei ein mindestens einem Schneidfahrtzustand zeitlich unmittelbar nachfolgender Leerfahrtzustand ein vom Werkstückanschlag entferntes Werkstückende des Werkstücks anzeigen kann. Dadurch ist eine Logik angegeben, anhand der Arbeitszustände des Schneidwerkzeugs beurteilt werden können. Arbeitszustände können beispielsweise gegeben sein durch einen Schneidfahrtzustand, der den Zustand bezeichnet, wenn das Schneidwerkzeug berührend mit dem Werkstück im Eingriff ist, und durch einen Leerfahrtzustand, der den Zustand bezeichnet, wenn das Schneidwerkzeug nicht mit dem Werkstück im Eingriff ist. Die Logik hat den Vorteil, dass das Schneidwerkzeug unmittelbar am oder relativ nahe am Werkstückende des jeweiligen Werkstücks gestoppt und umgekehrt werden kann.

Zweckmäßigerweise kann die Sensorik den Strombedarf des Schneidwerkzeugantriebs erfassen. Ein relativ hoher Strombedarf kann einen Schneidfahrtzustand anzeigen, während ein relativ niedriger Strombedarf einen Leerfahrtzustand anzeigen kann. Dadurch kann vorteilhafterweise eine konstruktiv günstig umzusetzende, zeitlich schnell arbeitende und einfach in bestehende Abkantvorrichtungen integrierbare Erfassung der Arbeitszustände des Schneidwerkzeugs realisiert werden.

Weiter zweckmäßigerweise kann die Sensorik die zu Erfassenden Schneidfahrtzustände und Leerfahrtzustände anhand von am Schneidwerkzeug auftretenden Schneidmessgrößen erfassen. Vorteilhafterweise können die Arbeitszustände des Schneidwerkzeugs anhand von unmittelbar am Schneidwerkzeug auftretenden Schneidmessgrößen bestimmt werden.

Zweckmäßigerweise kann die Sensorik zur Erfassung der Schneidmessgrößen des Schneidwerkzeugs einen Signalgeber und/oder einen Signalsensor aufweisen. Ein Signalgeber kann dabei durch mindestens einen Lasergeber oder durch mindestens einen Lichtgeber, insb. einen Lichtvorhang, oder durch mindestens einen Ultraschallgeber gebildet sein. Ein Signalsensor kann durch mindestens einen Lasersensor oder durch mindestens einen Lichtsensor oder durch mindestens einen Ultraschallsensor oder durch mindestens einen Hall-Sensor gebildet sein. Das hat den Vorteil, dass die Sensorik zweckmäßigerweise aus gängigen und insb. kostengünstigen Sensorik-Komponenten aufgebaut werden kann, wodurch die Abkantvorrichtung insgesamt relativ kostengünstig ist.

Zweckmäßigerweise kann die Sensorik einen oder mehrere am Schneidwerkzeug in Richtung der Schneidachse vor und/oder nach dem Schneidwerkzeug angeordneten Werkstückdetektoren aufweisen. Die Werkstückdetektoren können ein Werkstück erfassen, wobei die Erfassung des jeweiligen Werkstücks einen Schneidfahrtzustand anzeigt und wobei die Nicht-Erfassung einen Leerfahrtzustand anzeigt. Anhand eines in Richtung der Schneidachse vor dem Schneidwerkzeug angeordneten Werkstückdetektors kann das Vorhandensein eines undurchtrennten Werkstücks, sozusagen das Rohwerkstück, am Schneidwerkzeug erfasst werden. Weiterhin kann anhand eines in Richtung der Schneidachse nach dem Schneidwerkzeug angeordneten Werkstückdetektors das Vorhandensein eines durchtrennten Werkstücks erfasst werden, beispielsweises ein abgetrennter Werkstückspan und das zugeschnittene Werkstück. Das hat den Vorteil, dass die Arbeitszustände des Schneidwerkzeugs relativ zuverlässig und zeitlich relativ schnell erfassbar sind.

Weiter zweckmäßigerweise kann die Sensorik Schneidfahrtzustände und Leerfahrtzustände anhand eines an der Bestückungsfläche angeordneten Lichtvorhangs erfassen. Der Lichtvorhang weist zweckmäßigerweise längs der Biegeachse zueinander mit gegenseitigem Abstand angeordnete Lichtgeber und längs der Biegeachse zueinander mit gegenseitigem Abstand angeordnete Lichtsensoren auf. Beispielsweise sind Geber und Sensor jeweils paarweise gegenüberliegend am Schneidwerkzeug angeordnet, um auftretende Schneidmessgrößen am Schneidwerkzeug zu messen. Hierdurch können die Schneidmessgrößen am Schneidwerkzeug relativ schnell und relativ zuverlässig erfasst werden.

Zweckmäßigerweise kann die Sensorik einen an der Bestückungsfläche angeordneten Lichtvorhang aufweisen. Der Lichtvorhang kann längs der Biegeachse zueinander mit gegenseitigem Abstand angeordnete Lichtgeber und längs der Biegeachse zueinander mit gegenseitigem Abstand angeordnete Lichtsensoren aufweisen, wobei die Lichtgeber und Lichtsensoren zusammenwirken, um eine parallel bezüglich der Biegeachse zwischen der Startposition und der Endposition gemessene Werkstücklänge eines auf der Bestückungsfläche positionierten Werkstücks zu erfassen, wobei die Maschinensteuerung den Schneidwerkzeugantrieb so ansteuert, dass das Schneidwerkzeug automatisch von der Startposition nur bis zu einem, anhand der gemessene Werkstücklänge ermittelten, vom Werkstückanschlag entfernten Werkstückende des Werkstücks und von dort aus wieder zurück zur Startposition bewegt ist. Hierdurch können zwar nicht die Schneidmessgrößen am Schneidwerkzeug erfasst werden, allerdings kann anhand der gemessenen Werkstücklänge eines auf der Bestückungsfläche positionierten Werkstücks eine Umkehrposition ermittelt werden, anhand der man dann das Schneidwerkzeug mittels der Maschinensteuerung entsprechend ansteuern kann. Das Schneidwerkzeug kann somit aus seiner Bewegung heraus stoppen und zur Endposition zurück fahren. Das hat den Vorteil, dass das Schneidwerkzeug unmittelbar am oder relativ nahe am Werkstückende des jeweiligen Werkstücks gestoppt und umgekehrt werden kann. Natürlich können daneben auch Schneidmessgrößen am Schneidwerkzeug erfasst werden. Beispielsweise sind Geber und Sensor jeweils paarweise gegenüberliegend am Schneidwerkzeug angeordnet.

Weiter zweckmäßigerweise kann die Schneideinrichtung eine am Maschinengestell ortsfest angeordnete Führungsschiene und einen beweglichen Werkzeugschlitten aufweisen. Der Werkzeugschlitten kann an der Führungsschiene längs der Biegeachse führbar angeordnet und mittels des Schneidwerkzeugantriebs in Richtung der Biegeachse bewegbar sein. Weiterhin kann der Werkzeugschlitten mindestens eine Werkzeugaufnahme aufweisen, an der jeweils ein Schneidwerkzeug angeordnet ist. Dadurch kann das jeweilige Schneidwerkzeug vorteilhafterweise entlang des Maschinengestells zwischen der Startposition und der Endposition hin und her bewegt werden.

Zweckmäßigerweise kann das Schneidwerkzeug eine Schneidenaufnahme zum Aufnehmen mindestens eines Schneidenelements des Schneidwerkzeugs zum vollständigen Durchtrennen des Werkstücks aufweisen. Damit wird vorteilhafterweise erreicht, dass ein positioniertes Werkstück in Richtung der Schneidachse vollständig durchgetrennt werden kann.

Weiter zweckmäßigerweise kann die Sensorik einen Schneideneingriffsbereich des Schneidenelements mit dem Werkstück erfassen. Der Schneideneingriffsbereich kann am Schneidwerkzeug in Richtung der Schneidachse vor und/oder nach dem Schneidenelement angeordnet sein. Der Schneideneingriffsbereich kann zweckmäßigerweise einen unmittelbaren Berührbereich zwischen Schneidenelement und zu durchtrennendem Werkstück bilden, in dem das Schneidenelement berührend am Werkzeug anliegt. Der Schneideneingriffsbereich kann überwacht werden, um Arbeitszustände des Schneidwerkzeugs zu erfassen. Man kann sich beispielsweise eine am Schneidwerkzeug angeordnete Lichtschranke oder dergleichen vorstellen, die den Schneideneingriffsbereich überwacht und detektiert, ob ein Werkstück vorhanden ist oder nicht.

Zweckmäßigerweise ist die Sensorik am Schneidwerkzeug und/oder am Maschinengestell angeordnet. Je nachdem, wo die Sensorik angeordnet ist, kann die Maschinensteuerung und/oder die Sensorik ausgebildet sein, um drahtlos oder drahtgebunden miteinander zu kommunizieren. Das bietet den vorteilhaften Effekt, dass auf eine Kommunikation ermöglichende Leiterkabel verzichtet werden kann. Die Abkantvorrichtung ist dadurch relativ günstig in der Herstellung.

Um das Abkanten mit einer Abkantvorrichtung zeitlich zu optimieren, sprich schneller zu machen, umfasst die Erfindung den weiteren Grundgedanken, ein Verfahren zum Betreiben einer Abkantvorrichtung gemäß der vorhergehenden Beschreibung anzugeben. Dabei ist vorgesehen, dass z.B. mittels einer Sensorik der Abkantvorrichtung die Beendigung eines zweckmäßig mittels des Schneidwerkzeugs durchgeführten Durchtrennvorgangs, d.h. eines Schneidvorgangs, eines Werkstücks erfasst wird. Daraufhin wird das im Rahmen der Arbeitsbewegung längs der Biegeachse bewegte Schneidwerkzeug am Werkstückende, also zwischen der Startposition und der Endposition gestoppt, beispielsweise an einer sogenannten Umkehrposition. Weiter daraufhin wird das Schneidwerkzeug in die Startposition zurückbewegt. Das Schneidwerkzeug wird dabei aus der Umkehrposition heraus mit bezüglich der Arbeitsbewegung umgekehrter Bewegungsrichtung in die Startposition bewegt. Das Verfahren hat den vorteilhaften Effekt, dass sich das Schneidwerkzeug unmittelbar nach dem Passieren eines Werkstückendes des jeweiligen Werkstücks automatisch in die Startposition zurück bewegt. Die Notwendigkeit, sich zunächst zur Endposition und von dort aus wieder zurück zur Startposition zu bewegen, entfällt. Dadurch kann beim Durchtrennen eines Werkstücks mit der jeweiligen Werkstücklänge korrelierende Bearbeitungszeit eingespart werden.

Weiter zweckmäßigerweise können der Werkstückanschlag und die Startposition eine Querrichtung definieren. Die Querrichtung steht winkelig oder insb. rechtwinklig auf der Biegeachse. Das hat den Effekt, dass die Startposition und der Werkstückanschlag quer zur Arbeitsbewegung des Schneidwerkzeugs angeordnet sind. Dadurch können die Startposition und der Werkstückanschlag vorteilhafterweise zueinander unmittelbar benachbart angeordnet sein.

Zweckmäßigerweise kann in Richtung der Biegeachse zwischen dem Werkstückanschlag und der Startposition einerseits und der Endposition andererseits die Bestückungsfläche angeordnet sein. Damit sind sozusagen die Endlagen, die im Rahmen der Arbeitsbewegung vom Schneidwerkzeug anfahrbar sind, stets durch die Bestückungsfläche zueinander beabstandet. Das hat den Vorteil, dass ein an der Bestückungsfläche positioniertes Werkstück längs der Biegeachse vollständig durchtrennt werden kann.

Weiter zweckmäßigerweise kann eine Bestückungsposition für ein zu positionierendes Werkstück unmittelbar an oder im Bereich des Werkstückanschlags und der Startposition angeordnet sein. Dadurch ist ein an der jeweiligen Bestückungsposition positioniertes Werkstück stets am Werkstückanschlag angeordnet, so dass sich dieses längs der Biegeachse am Werkstückanschlag abstützen kann.

Um von der Sensorik zur Erfassung von Schneidmessgrößen, Schneidfahrtzuständen, Leerfahrtzuständen und/oder eines Strombedarfs ermittelte Messwerte speichern und auswerten zu können, weist die Sensorik zweckmäßigerweise eine Rechnereinheit auf, die mit einem Speicherelement und einem Rechenelement zum Abspeichern und Analysieren der jeweiligen Messwerte dient. Das Abspeichern und Analysieren kann in Echtzeit erfolgen. Das hat den vorteilhaften Effekt, dass die Maschinensteuerung sozusagen sofort und ohne Zögern, den Schneidwerkzeugantrieb zum Bewegen des Schneidwerkzeugs von einem vom Werkstückanschlag entfernten Werkstückende des Werkstücks zurück zur Startposition ansteuern kann.

Zusammenfassend bleibt festzuhalten: Die vorliegende Erfindung betrifft vorzugsweise eine Abkantvorrichtung zum Biegen eines Werkstücks aus Flachmaterial, mit einem eine plane Bestückungsfläche aufweisenden Maschinengestell, an dem eine relativ zur Bestückungsfläche bewegbare Klemmwange angeordnet ist. Die Klemmwange klemmt ein auf die Bestückungsfläche an einer vorgegebenen oder vorgebbaren Bestückungsposition positioniertes Werkstück am Maschinengestell lösbar fest. Weiterhin ist am Maschinengestell eine Biegeeinrichtung aus mindestens einem Biegewerkzeug angeordnet, das relativ zur Bestückungsfläche um eine Biegeachse herum bewegbar ist, so dass das festgeklemmte Werkstück um einen bestimmten Biegewinkel biegbar ist. Weiterhin kann am Maschinengestell eine Schneideinrichtung aus mindestens einem Schneidwerkzeug angeordnet sein, das mit einem Schneidwerkzeugantrieb im Rahmen einer Arbeitsbewegung relativ zur Bestückungsfläche in Richtung der Biegeachse zwischen einer Startposition und einer Endposition hin und her bewegbar ist, um das festgeklemmte Werkstück entlang einer zur Biegeachse parallel ausgerichteten Schneidachse vollständig durchzutrennen, wobei die Bestückungsposition in Richtung der Biegeachse durch einen am Maschinengestell angeordneten Werkstückanschlag zum Anlegen eines umzubiegenden und/oder zu durchtrennenden Werkstücks vorgegeben ist. Dabei sind der Werkstückanschlag und die Startposition zueinander benachbart und in Richtung der Biegeachse einenends am Maschinengestell und die Endposition anderenends am Maschinengestell angeordnet. Wesentlich ist, dass eine Maschinensteuerung vorgesehen ist, die mit einem Schneidwerkzeugantrieb eines Schneidwerkzeugs zum Schneiden des Werkstücks gekoppelt ist und die zur Durchführung eines Schneidvorgangs zum Durchtrennen eines Werkstücks, das bezüglich der Biegeachse oder einer Maschinenlängsachse der Abkantvorrichtung kleiner ist als ein Abstand zwischen der Startposition und der Endposition, den Schneidwerkzeugantrieb automatisch zum Bewegen des Schneidwerkzeugs von der Startposition nur bis zu einem davon entfernten Werkstückende des Werkstücks und von dort aus wieder zurück zur Startposition ansteuert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Ansicht eines bevorzugten Ausführungsbeispiels einer Abkantvorrichtung, wobei ein an der Abkantvorrichtung positioniertes Werkstück mittels einer Schneideinrichtung zugeschnitten wird,
- Fig. 2: eine Ansicht der Schneideinrichtung der Abkantvorrichtung aus Fig. 1 mit Blick in Richtung eines dort eingetragenen Pfeils II,
- Fig. 3: eine Ansicht der Schneideinrichtung der Abkantvorrichtung aus Fig. 1 mit Blick in Richtung eines dort eingetragenen Pfeils III, wobei ein Werkstückspan entfernt ist.

Die Zeichnungen 1 bis 3 zeigen ein bevorzugtes Ausführungsbeispiel einer im Gesamten mit dem Bezugszeichen 1 beschrifteten Abkantvorrichtung, die in den entsprechenden Fachkreisen auch als Langabkantvorrichtung bekannt ist. Abkantvorrichtungen dienen dazu, Werkstücke 2 aus Flachmaterial zu biegen, um beliebige Biegegeometrien herzustellen.

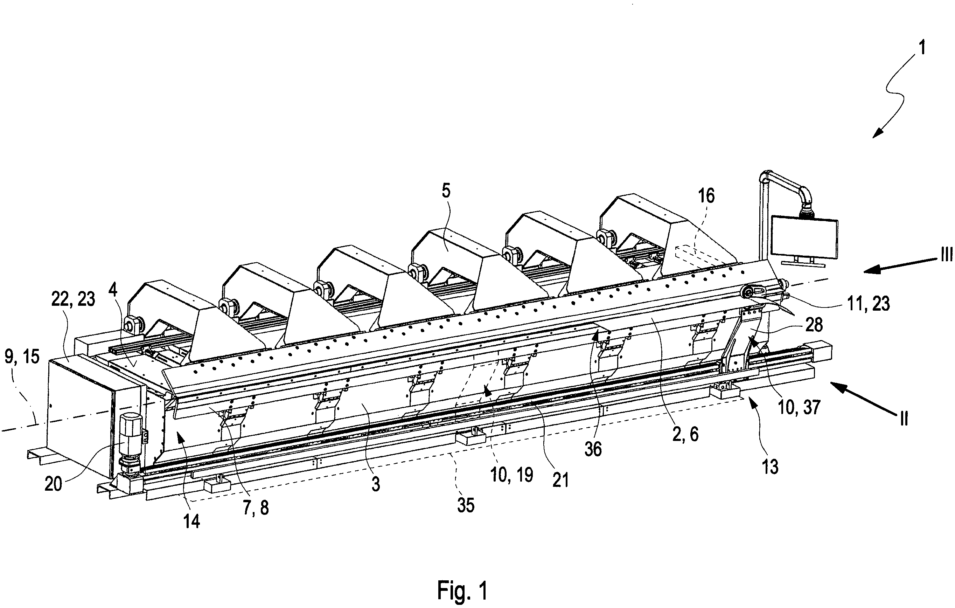

Die Abkantvorrichtung 1 nach Fig. 1 ist in einer perspektivischen Ansicht dargestellt. Die Abkantvorrichtung 1 weist ein Maschinengestell 3 mit einer planen Bestückungsfläche 4 auf. Das Maschinengestell 3 ist auf einem nicht illustrierten, ebenen Untergrund abgestellt, so dass die Bestückungsfläche 4 nach oben weist, was man als Gebrauchslage beschreiben könnte. Jedenfalls ist am Maschinengestell 3 eine relativ zur Bestückungsfläche 4 bewegbare Klemmwange 5 angeordnet, die vorliegend ein auf der Bestückungsfläche 4 an einer Bestückungsposition 6 positioniertes, vorgeklemmtes und bezüglich der Bestückungsfläche 4 seitlich überlappendes Werkstück 2 am Maschinengestell 3 lösbar festklemmt. Am Maschinengestell 3 ist weiterhin eine Biegeeinrichtung 7 aus mindestens einem Biegewerkzeug 8 angeordnet. Das Biegewerkzeug 8 ist exemplarisch in einem unbetätigten Ruhezustand dargestellt. In einem nicht illustrierten, vom unbetätigten Ruhezustand abweichenden betätigten Aktivzustand ist das Biegewerkzeug 8 relativ zur Bestückungsfläche 4 bewegt, so dass das festgeklemmte Werkstück 2 um eine Maschinenlängsachse 9 bzw. eine Biegeachse 9 herum mit einem bestimmten Biegewinkel gebogen werden kann.

Nicht dargestellt ist auch eine Art von Langabkantmaschinen, die neben einem ersten unteren Biegewerkzeug auch ein zweites oberes Biegewerkzeug haben. Mit den beiden Biegewerkzeugen kann in beide Richtungen gebogen werden, ohne das Werkstück drehen zu müssen.

Eine mit dem Bezugszeichen 10 bezeichnete und an der Abkantvorrichtung 1 angeordnete Schneideinrichtung kann mitsamt eines Schneidwerkzeugs 11 zum Zuschneiden des Werkstücks 2 im Rahmen einer Arbeitsbewegung 12 relativ zur Bestückungsfläche 4 in Richtung der Maschinenlängsachse 9 bzw. der Biegeachse 9 zwischen einer Startposition 13 und einer Endposition 14 hin und her bewegt werden. Die Schneideinrichtung 10 weist zweckmäßigerweise einen Werkzeugschlitten 28 auf, der in diesem Fall an einer am Maschinengestell 3 festgemachten Führungsschiene 21 führbar ist. Zum Antreiben der Schneideinrichtung 10 ist exemplarisch ein am Maschinengestell 3 angeordneter mit der Schneideinrichtung 10 bzw. mit dem Werkzeugschlitten 28 gekoppelter Schneidwerkzeugantrieb 20 vorgesehen, siehe Fig. 1.

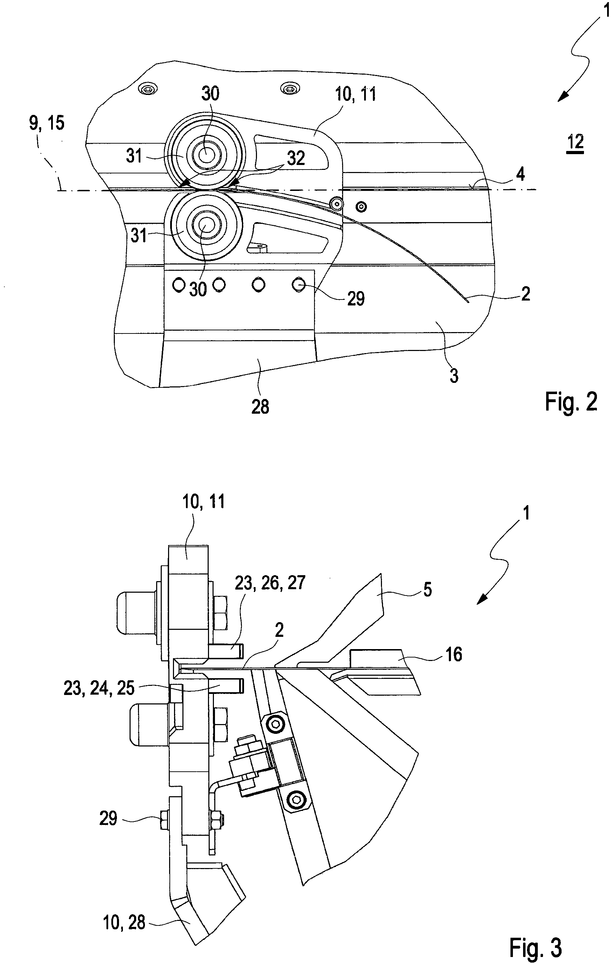

Die Fig. 2 zeigt in einer Ansicht unter anderem die am Maschinengestell 3 angeordnete Schneideinrichtung 10 mit Schneidwerkzeug 11, wobei man hier genauer erkennen kann, dass der Werkzeugschlitten 28 eine Werkzeugaufnahme 29 hat, an der das Schneidwerkzeug 11 angebunden ist. Das Schneidwerkzeug 11 wiederum hat exemplarisch zwei Schneidenaufnahmen 30, die jeweils zum Aufnehmen mindestens eines Schneidenelements 31 dienen. Mit den Schneidenelementen 31 kann jeweils oder zusammen das Werkstück 2 vollständig entlang einer exemplarisch zur Maschinenlängsachse 9 bzw. zur Biegeachse 9 parallel ausgerichteten der Schneidachse 15 durchtrennt werden.

Die Fig. 3 zeigt die Schneideinrichtung 10 aus Fig. 1 in einer weiteren Ansicht, wobei man einen am Maschinengestell 3 angeordneten, die Bestückungsposition 6 in Richtung der Maschinenlängsachse 9 bzw. der Biegeachse 9 vorgebenden Werkstückanschlag 16 erkennen kann. Am Werkstückanschlag 16 kann das zu durchtrennende Werkstück 2 angelegt oder längs der Maschinenlängsachse 9 bzw. der Biegeachse 9 sozusagen ausgerichtet werden, beispielsweise um es umzubiegen und/oder durchzutrennen.

In der Fig. 1 kann man ferner erkennen, dass der Werkstückanschlag 16 und die Startposition 13 so gewählt sind, dass sie zueinander benachbart und in Richtung der Maschinenlängsachse 9 bzw. der Biegeachse 9 einenends am Maschinengestell 3 angeordnet sind, während die Endposition 14 anderenends am Maschinengestell 3 angeordnet ist.

Die Abkantvorrichtung 1 weist weiterhin eine Maschinensteuerung 22 auf, siehe Fig. 1, die mit dem Schneidwerkzeugantrieb 20 gekoppelt ist. Die Maschinensteuerung 22 ist zur Ansteuerung des Schneidwerkzeugantriebs 20 und damit zur Durchführung eines Schneidvorgangs zum Durchtrennen eines Werkstücks 2 vorgesehen, wobei es den Schneidwerkzeugantrieb 20 automatisch zum Bewegen des Schneidwerkzeugs 11 von der Startposition 13 nur bis zu einem vom Werkstückanschlag 16 entfernten Werkstückende 36 des Werkstücks 2 und von dort aus wieder zurück zur Startposition 13 ansteuert. Das Werkstück 2 ist dabei bezüglich der Maschinenlängsachse 9 bzw. der Biegeachse 9 kleiner, als ein Abstand 35 zwischen der Startposition 13 und der Endposition 14.

Vorliegend ist eine Sensorik 23 zum Erfassen von Schneidfahrtzuständen 37 und Leerfahrtzuständen 19 des Schneidwerkzeugs 11 vorgesehen, wobei man anhand dieser Arbeitszustände Werkstückenden 36 eines Werkstücks 2 erfassen kann; grundsätzlich zeigt ein einem Schneidfahrtzustand 37 zeitlich unmittelbar nachfolgender Leerfahrtzustand 19 ein vom Werkstückanschlag 16 entferntes Werkstückende 36 des Werkstücks 2 an. Vorliegend ist die Sensorik 23 exemplarisch mehrteilig ausgeführt, nämlich exemplarisch mit einem ersten Teil der Sensorik 23, angeordnet an der Schneideinrichtung 10 und/oder dem Schneidwerkzeug 11, und einem zweiten Teil der Sensorik 23, angeordnet an der Maschinensteuerung 22. Die an der Maschinensteuerung 22 angeordnete Sensorik 23 erfasst ein vom Werkstückanschlag 16 entferntes Werkstückende 36 des Werkstücks 2 zweckmäßigerweise indem der Strombedarf des Schneidwerkzeugantriebs 20 überwacht wird.

In Fig. 3 kann man exemplarisch erkennen, dass die an der Schneideinrichtung 10 und/oder am Schneidwerkzeug 11 angeordnete Sensorik 23 zum Erfassen der Schneidfahrtzustände 37 und der Leerfahrtzustände 19 einen Signalgeber 24 und einen Signalsensor 26 aufweist. Der Signalgeber 24 ist zweckmäßigerweise durch mindestens einen Lasergeber 25 und der Signalsensor 26 zweckmäßigerweise durch mindestens einen Lasersensor 27 gebildet. Der Lasersensor 27 und der Signalsensor 26 können, in der Form eines Werkstückdetektors, einen am Schneidwerkzeug 11 in Richtung der Schneidachse 15 vor und/oder nach dem Schneidwerkzeug 11 angeordneten Schneideneingriffsbereich 32 des Schneidenelements 31 mit dem Werkstück 2 erfassen, wobei die Erfassung eines Werkstücks 2 einen Schneidfahrtzustand 37 anzeigt und wobei die Nicht-Erfassung einen Leerfahrtzustand 19 anzeigt, siehe Fig. 2.

## Patentansprüche

1. Abkantvorrichtung zum Biegen eines Werkstücks aus Flachmaterial,
- mit einem eine plane Bestückungsfläche (4) aufweisenden Maschinengestell (3), an dem eine relativ zur Bestückungsfläche (4) bewegbare Klemmwange (5) angeordnet ist, die ein auf die Bestückungsfläche (4) an einer Bestückungsposition (6) positioniertes Werkstück (2) am Maschinengestell (3) lösbar festklemmt,
- wobei an der Abkantvorrichtung (1) mindestens eine Biegeeinrichtung (7) aus mindestens einem Biegewerkzeug (8) angeordnet ist, das relativ zur Bestückungsfläche (4) bewegbar ist, um das festgeklemmte Werkstück (2) um einen vorgegebenen oder vorgebaren Biegewinkel zu biegen,
- wobei an der Abkantvorrichtung (1) eine Schneideinrichtung (10) aus mindestens einem Schneidwerkzeug (11) angeordnet ist, das mit einem Schneidwerkzeugantrieb (20) im Rahmen einer Arbeitsbewegung (12) relativ zur Bestückungsfläche (4) in Richtung einer Maschinenlängsachse (9) zwischen einer Startposition (13) und einer Endposition (14) hin und her bewegbar ist, um das festgeklemmte Werkstück (2) entlang einer Schneidachse (15) vollständig durchzutrennen,
- wobei die Bestückungsposition (6) quer zur Maschinenlängsachse (9) durch einen am Maschinengestell (3) angeordneten Werkstückanschlag (16) zum Anlegen eines umzubiegenden und/oder zu durchtrennenden Werkstücks (2) vorgegeben ist,
- wobei die Startposition (13) einenends am Maschinengestell (3) und die Endposition (14) anderenends am Maschinengestell (3) angeordnet sind, und
- wobei eine Maschinensteuerung (22) vorgesehen ist, die mit dem Schneidwerkzeugantrieb (20) gekoppelt ist und die zur Durchführung eines Schneidvorgangs zum Durchtrennen eines Werkstücks (2), das bezüglich der Maschinenlängsachse (9) kleiner ist als ein Abstand (35) zwischen der Startposition (13) und der Endposition (14), den Schneidwerkzeugantrieb (20) automatisch zum Bewegen des Schneidwerkzeugs (11) von der Startposition (13) nur bis zu einem von der Startposition (13) entfernten Werkstückende (36) des Werkstücks (2) und von dort aus wieder zurück zur Startposition (13) ansteuert.

2. Vorrichtung nach Anspruch 1,
**dadurch gekennzeichnet, dass**
die Maschinensteuerung (22) eine Sensorik (23) aufweist, die ein von der Startposition (13) entferntes Werkstückende (36) des Werkstücks (2) ermittelt.

3. Vorrichtung nach Anspruch 2,
**dadurch gekennzeichnet, dass**
die Sensorik (23) einen Schneidfahrtzustand (37) und einem Leerfahrtzustand (19) des Schneidwerkzeugs (11) erfasst, wobei ein einem Schneidfahrtzustand (37) zeitlich unmittelbar nachfolgender Leerfahrtzustand (19) ein von der Startposition (13) entferntes Werkstückende (36) des Werkstücks (2) anzeigt.

4. Vorrichtung nach Anspruch 3,
**dadurch gekennzeichnet, dass**
die Sensorik (23) den Strombedarf des Schneidwerkzeugantriebs (20) erfasst, wobei ein relativ hoher Strombedarf einen Schneidfahrtzustand (37) und ein relativ niedriger Strombedarf einen Leerfahrtzustand (19) anzeigt.

5. Vorrichtung nach einem der Ansprüche 2 oder 3,
**dadurch gekennzeichnet, dass**
die Sensorik (23) Schneidfahrtzustände (37) und Leerfahrtzustände (19) anhand von am Schneidwerkzeug (11) auftretenden Schneidmessgrößen erfasst.

6. Vorrichtung nach Anspruch 5,
**dadurch gekennzeichnet, dass**
- die Sensorik (23) zur Erfassung der Schneidmessgrößen des Schneidwerkzeugs (11) einen Signalgeber (24) und/oder einen Signalsensor (26) aufweist, wobei
- der Signalgeber (24) durch mindestens einen Lasergeber (25), durch mindestens einen Lichtgeber, insb. einen Lichtvorhang, oder durch mindestens einen Ultraschallgeber gebildet ist, und/oder
- der Signalsensor (26) durch mindestens einen Lasersensor (27), durch mindestens einen Lichtsensor oder durch mindestens einen Ultraschallsensor oder durch mindestens einen Hall-Sensor gebildet ist.

7. Vorrichtung nach einem der Ansprüche 5 oder 6,
**dadurch gekennzeichnet, dass**
die Sensorik (23) einen am Schneidwerkzeug (11) in und/oder quer zur Richtung der Schneidachse (15) vor und/oder nach dem Schneidwerkzeug (11) angeordneten Werkstückdetektor aufweist, der ein Werkstück (2) erfasst, wobei die Erfassung eines Werkstücks (2) einen Schneidfahrtzustand (37) anzeigt und wobei die Nicht-Erfassung einen Leerfahrtzustand (19) anzeigt.

8. Vorrichtung nach einem der Ansprüche 2 bis 7,
**dadurch gekennzeichnet, dass**
die Sensorik (23) Schneidfahrtzustände (37) und Leerfahrtzustände (19) anhand eines an der Bestückungsfläche (4) angeordneten Lichtvorhangs erfasst, wobei der Lichtvorhang längs der Maschinenlängsachse (9) zueinander mit gegenseitigem Abstand angeordnete Lichtgeber und längs der Maschinenlängsachse (9) zueinander mit gegenseitigem Abstand angeordnete Lichtsensoren aufweist, die am Schneidwerkzeug (11) auftretende Schneidmessgrößen messen.

9. Vorrichtung nach einem der Ansprüche 2 bis 8,
**dadurch gekennzeichnet, dass**
die Sensorik (23) einen an der Bestückungsfläche (4) angeordneten Lichtvorhang aufweist, der längs der Maschinenlängsachse (9) zueinander mit gegenseitigem Abstand angeordnete Lichtgeber und längs der Maschinenlängsachse (9) zueinander mit gegenseitigem Abstand angeordnete Lichtsensoren aufweist, wobei die Lichtgeber und Lichtsensoren zusammenwirken, um eine parallel bezüglich der Maschinenlängsachse (9) zwischen der Startposition (13) und der Endposition (14) gemessene Werkstücklänge (38) eines auf der Bestückungsfläche (4) positionierten Werkstücks (2) zu erfassen, wobei die Maschinensteuerung (22) den Schneidwerkzeugantrieb (20) so ansteuert, dass das Schneidwerkzeug (11) automatisch von der Startposition (13) nur bis zu einem, anhand der gemessene Werkstücklänge (38) ermittelten, vom Werkstückanschlag (16) entfernten Werkstückende (36) des Werkstücks (2) und von dort aus wieder zurück zur Startposition (13) bewegt ist.

10. Vorrichtung nach einem der vorhergehenden Ansprüche,
**dadurch gekennzeichnet, dass**
- das Schneidwerkzeug (11) eine Schneidenaufnahme (30) zum Aufnehmen mindestens eines Schneidenelements (31) des Schneidwerkzeugs (11) zum vollständigen Durchtrennen des Werkstücks (2) aufweist,
- die Sensorik (23) einen Schneideneingriffsbereich (32) des Schneidenelements (31) mit dem Werkstück (2) erfasst, der am Schneidwerkzeug (11) in Richtung der Schneidachse (15) vor oder nach dem Schneidenelement (31) angeordnet ist.

11. Vorrichtung nach einem der Ansprüche 2 bis 10,
**dadurch gekennzeichnet, dass**
die Sensorik (23) am Schneidwerkzeug (11) und/oder am Maschinengestell (3) angeordnet ist.

12. Vorrichtung nach einem der Ansprüche 2 bis 11,
**dadurch gekennzeichnet, dass**
die Maschinensteuerung (22) und/oder die Sensorik (23) ausgebildet sind, bei elektrisch leitfähigen Werkstücken (2) einen Durchleit-Messstrom messtechnisch zu erfassen, um die elektrische Durchleitfähigkeit des jeweiligen Werkstückes (2) zu ermitteln, um ein Werkstückende (36) des Werkstücks (2) zu detektieren.

13. Vorrichtung nach einem der Ansprüche 1 bis 12,
**dadurch gekennzeichnet, dass**
an der Bestückungsfläche (4) statt eines Werkstücks (2) mehrere voneinander getrennte Werkstücke (2) angeordnet sind, die mit gegenseitigem Abstand zueinander an der Bestückungsfläche (4) lösbar festklemmt sind, wobei zwischen zwei benachbarten Werkstücken (2) jeweils eine werkstückfreie Lücke definiert ist, wobei die Abkantvorrichtung (1) dazu eingerichtet ist, die mehreren Werkstücke (2) gemeinsam zu durchtrennen und/oder umzubiegen, wobei die Anzahl der Werkstücke (2) oder die Anzahl der Lücken in die Maschinensteuerung (22) einspeicherbar ist, um eine vorgegebene oder vorgebare Anzahl von Lücken und/oder Werkstücken (2) im Rahmen eines Schneidvorgangs vom Schneidwerkzeug (11) überfahren zu lassen, bevor das Schneidwerkzeug (11) in die Startposition (13) zurückkehrt.

14. Vorrichtung nach einem der Ansprüche 1 bis 13,
**dadurch gekennzeichnet, dass**
die Abkantvorrichtung (1) eine Doppelabkantvorrichtung ist, die zwei Biegewerkzeuge (8) aufweist, um ein Werkstück (2) relativ zur Bestückungsfläche (4) in zwei unterschiedliche Richtungen um eine Maschinenlängsachse (9) herum zu biegen.

15. Verfahren zum Betreiben einer Abkantvorrichtung (1) nach einem der vorhergehenden Ansprüche,
wobei die Beendigung eines Durchtrennvorgangs eines Werkstücks (2) erfasst wird, daraufhin das im Rahmen der Arbeitsbewegung (12) bewegte Schneidwerkzeug (11) zwischen der Startposition (13) und der Endposition (14) gestoppt wird und weiter daraufhin das Schneidwerkzeug (11) in die Startposition (13) zurückbewegt wird.
